Europäisches Patentamt

(19) European Patent Office

Office européen des brevets

(11) Publication number: **0 306 669 B1**

(12) # EUROPEAN PATENT SPECIFICATION

(45) Date of publication of patent specification:
29.05.91 Bulletin 91/22

(51) Int. Cl.⁵: **G01M 1/06**

(21) Application number: 88111527.3

(22) Date of filing: 18.07.88

(54) **Method to stop a rotor balancing measurement.**

(30) Priority: 08.09.87 DE 3730084

(43) Date of publication of application:
15.03.89 Bulletin 89/11

(45) Publication of the grant of the patent:
29.05.91 Bulletin 91/22

(84) Designated Contracting States:
**ES FR GB IT**

(56) References cited:
**US-A- 4 480 472**

(73) Proprietor: **HOFMANN
WERKSTATT-TECHNIK GMBH
Werner-von-Siemens-Strasse 2
W-6102 Pfungstadt (DE)**

(72) Inventor: **Rothamel, Karl
Wittmannstrasse 43
W-6100 Darmstadt (DE)**

(74) Representative: **Nöth, Heinz, Dipl.-Phys. et al
Patentanwälte Pfenning, Meinig & Partner
Mozartstrasse 17
W-8000 München 2 (DE)**

**Beschreibung**

Die Erfindung betrifft ein Verfahren zum Stillsetzen des Meßlaufs eines auszuwuchtenden Rotors mittels einer Elektromagnet-Bremse nach dem Oberbegriff des Anspruchs 1 sowie eine elektrische Schaltungsanordnung zur Durchführung dieses Verfahrens nach dem Oberbegriff des Anspruchs 4.

Bei Radwuchtmaschinen zur Messung der Unwucht an Rotoren, insbesondere an Kraftfahrzeugrädern, erfolgt das Stillsetzen des Meßlaufs des auszuwuchtenden Rotors, insbesondere des Kraftfahrzeugrades, bei den gängigen Auswuchtmaschinen mit Hilfe einer Betriebsbremse, welche als Elektromagnetbremse ausgebildet ist. In dieser Elektromagnetbremse ist ein Magnetteil mit eingegossener Spule vorgesehen. Ferner enthält die Bremse einen am Magnetteil (Stator) befestigten Reibbelag sowie einen Ankerteil, der aus einer Ankerscheibe besteht, die mit einer Federkraft zur Erzielung eines Luftspalts zwischen Magnetteil und Ankerteil bei gelüfteter Bremse beaufschlagt ist. Der Ankerteil ist mit dem in der Auswuchtmaschine abzubremsenden Maschinenteil, beispielsweise einer Motorwelle eines Elektromotors zum Antrieb der Hauptwelle der Auswuchtmaschine, verbunden. Der Luftspalt ist auf ein Nennmaß eingestellt. Beim Anlegen einer Gleichspannung (Nennspannung) wird die Ankerscheibe durch das entstehende Magnetfeld gegen den Reibbelag gezogen. Durch Reibschluß wird dann mit dem Nennbremsmoment gebremst. Nach Abschalten der Gleichspannung zieht die Federkraft, welche von der vorgespannten Feder auf die Ankerscheibe vermittelt wird, die Ankerscheibe in die Ursprungslage zurück (gelüftete Bremse).

Beim Einsatz einer derartigen Elektromagnet-Bremse in einer Auswuchtmaschine ist eine vielseitige Verwendung anzustreben.

Zum Anziehen der Spanneinrichtung, insbesondere der Spannmutter, ist es beim Aufspannen des Rotors auf der Hauptwelle erforderlich, daß die Elektromagnet-Bremse als Haltebremse wirkt, um ein einwandfreies Zentrieren und einen festen Sitz des Rotors an der Hauptwelle der Unwuchtmaschine zu erzielen. Dies bedingt ein relativ hohes Nennbremsmoment und eine entsprechend hoch bemessene Nennspannung für das Anlegen der Ankerscheibe am Reibbelag. Dies würde beim Einschalten der Nennspannung zum Abbremsen des Meßlaufs zu einem überhöhten Bremsmoment führen.

Aufgabe der Erfindung ist es daher, ein Verfahren und eine Schaltungsanordnung der eingangs genannten Art zu schaffen, durch die ein Verdrehen des auszuwuchtenden Rotors gegenüber der Hauptwelle der Auswuchtmaschine beim Einschalten des Bremsvorgangs verhindert wird.

Diese Aufgabe wird erfindungsgemäß beim Verfahren durch die Schritte des Anspruchs 1 und bei der Schaltungsanordnung durch die Merkmale des Anspruchs 4 gelöst.

Durch die Erfindung wird erreicht, daß nach dem Einschalten des Bremsvorgangs zur Stillsetzung des Meßlaufs nicht das hohe Nennbremsmoment, welches man bei der Funktion der Elektromagnet-Bremse als Haltebremse – z.B. beim Anziehen der Spannmutter – benötigt, erreicht wird, sondern ein niedrigeres Bremsmoment, durch welches ein weiches und ruckfreies Abbremsen gewährleistet wird. Die Elektromagnet-Bremse kann sowohl mit dem Nennbremsmoment als Haltebremse zum Anziehen der Spannmutter der Spanneinrichtung als auch mit dem wesentlich verminderten Bremsmoment als Betriebsbremse zum Stillsetzen der Hauptwelle der Auswuchtmaschine nach dem Meßlauf betrieben werden. Beim Einschalten des Bremsvorgangs zum Abbremsen des Meßlaufs wird das Nennbremsmoment nicht erreicht, wodurch die erwähnte weiche Bremsung gewährleistet wird.

Beim Anlegen der Nennspannung als Versorgungsspannung der Elektromagnetspule der Elektromagnet-Bremse steigt der Versorgungsstrom in dieser an, bis die Kraft der an der Ankerscheibe angreifenden Feder überwunden wird, und die Ankerscheibe sich zum Magnetteil (Stator) der Elektromagnet-Bremse bewegt. Es kann sich hier auch um eine ungleichmäßige Bewegung handeln, die durch Inhomogenitäten in der Feder oder des Magnetfeldes hervorgerufen werden.

Während sich die Ankerscheibe bei ihrer Bewegung am Reibbelag anlegt, wird der kontinuierliche Verlauf des Versorgungsstromanstiegs in der Elektromagnetspule unterbrochen. Es kann sogar kurzzeitig eine Versorgungsstromverringerung auftreten. Diese Unterbrechung des Versorungsstromanstiegs läßt sich bei der Erfindung ausnützen dahingehend, daß der Versorgungsstromanstieg bei angelegter Nennspannung am Elektromagneten abgetastet wird und bei der Unterbrechung dann die Versorgungsspannung für die Elektromagnetspule verringert wird, so daß nur noch ein verringertes Bremsmoment hervorgerufen wird. Dieses verringerte Bremsmoment würde nicht genügen, um bei gelüfteter Bremse den Luftspalt gegen die Federkraft, welche an der Ankerscheibe angreift, zu überwinden. Jedoch läßt sich gemäß der Erfindung zunächst durch Anlegen der Nennspannung als Versorgungsspannung für die Elektromagnetspule die an der Ankerscheibe angreifende Federkraft überwinden und bei am Reibbelag angelegter Ankerscheibe das gewünschte verringerte Bremsmoment durch Verringerung der Versorgungsspannung für die Elektromagnetspule erzielen.

Für die Erzielung des verringerten Bremsmoments genügt es, wenn eine Versorgungsspannung an die Elektromagnetspule gelegt wird, welche etwa das 2- bis 3fache der an der Ankerscheibe angreifenden Federkraft erreicht. Natürlich können in Abhängigkeit von den auszuwuchtenden Rotoren auch andere verringerte Bremsmomente durch entsprechende Wahl der verringerten Versorgungsspannung erzielt werden.

Zur Durchführung des Stillsetzens des Meßlaufs mit verringertem Bremsmoment wird eine elektrische Schaltungsanordnung verwendet, die eine Überwachungsschaltung aufweist, welche den durch die Elektromagnetspule fließenden Versorgungsstrom bei angelegter Nennspannung überwacht und auswertet. Diese Überwachungsschaltung steuert einen schalter an, über den die jeweilige Versorgungsspannung an die Elektromagnetspule der Elektromatnet-Bremse angelegt wird. Wenn diese Überwachungsschaltung eine Unterbrechung des Versorgungsstromanstiegs feststellt, wird der Schalter angesteuert derart, daß die zunächst eingeschaltete Nennspannung bzw. eine darüberliegende Versorgungsspannung abgeschaltet wird. In dieser ersten Phase wird erreicht, daß die Ankerscheibe gegen die Kraft der Feder über den Luftspalt hin am Reibbelag zur Anlage gebracht wird. Das nunmehr gewünschte Bremsmoment wird durch eine gegenüber der Nennspannung verringerte zweite Versorgungsspannung, die an die Elektromagnetspule angelegt ist, eingestellt. In Abhängigkeit vom Versorgungsstromanstieg kann der Schalter zeitverzögert angesteuert werden. Hierdurch wird gewährleistet, daß auch bei nicht exakter Parallelführung der Ankerscheibe über den Luftspalt an den Reibbelag hin erst dann die verringerte Versorgungsspannung an die Elektromagnetspule angelegt wird, wenn die Ankerscheibe insgesamt am Reibbelag anliegt. Es wird hierbei auch bei gekippter Bewegung der Ankerscheibe über den Luftspalt hin gewährleistet, daß das gewünschte verringerte Bremsmoment dann zur Wirkung kommt, wenn die gesamte Ankerscheibe in der Bremsposition, d.h. in vollständiger Anlage am Reibbelag, sich befindet.

Die Vorteile, welche bei der Erfindung erzielt werden, sind darin zu sehen, daß beim Abbremsen des Meßlaufs ein Verdrehen des Rades auf der Hauptwelle der Auswuchtmaschine vermieden wird. Die Elektromagnet-Bremse kann sowohl als Haltebremse als auch als ruckfreie Betriebs- und Positionsbremse zum Einsatz kommen. Durch das über den Drehzahlbereich kontante Bremsmoment wird eine verkürzte Bremszeit und damit eine kürzere Zykluszeit erreicht. Das Betätigen der Haltebremse, beispielsweise durch Fußschalter, ruft kein Verdrehen des Rades auf der Hauptwelle hervor. Bei Drehzahlen oberhalb eines Schwellwertes wird nämlich zunächst die Betriebsbremse und dann erst bei Erreichen einer verringerten Drehzahl die Haltebremse aktiviert. Eine Erwärmung des Elektromotors, der bei herkömmlichen Auswuchtmaschinen auch zum Abbremsen des Meßlaufs, beispielsweise durch pulsierenden Gleichstrom oder durch Reversieren der Drehrichtung bei Drehstrom, verwendet wird, ergibt sich nicht, so daß ein zusätzlicher Ventilator zur Abkühlung des Elektromotors überflüssig ist. Es lassen sich Elektromotoren mit niedrigerer Isolationsklasse verwenden. Außerdem kann die Ansteuerschaltung für die Elektromagnet-Bremse mit Halb leitern ausgestattet werden, die im Niederspannungsbereich arbeiten, so daß eine erhöhte Betriebssicherheit sich erreichen läßt,

Anhand der beiliegenden Figuren wird die Erfindung noch näher erläutert. Es zeigt :

Fig. 1 ein Blockschaltbild einer Schaltungsanordnung zur Ansteuerung einer Elektromagnetspule einer Elektromagnet-Bremse für das Stillsetzen des Meßlaufs eines auszuwuchtenden Rotors an einer Auswuchtmaschine als Ausführungsbeispiel der Erfindung, und

Fig. 2 den Verlauf des Versorgungsstroms bei eingeschalteter Nennspannung und anschließender verringerter Betriebsspannung in der Elektromagnetspule der Elektromagnet-Bremse.

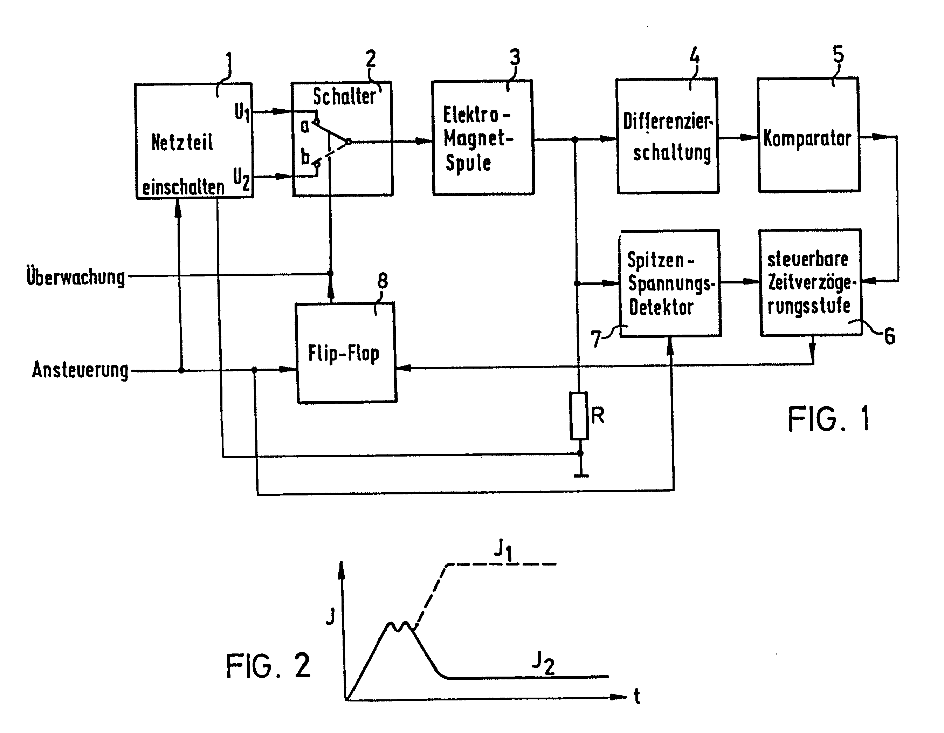

Bei dem in der Fig. 1 dargestellten Ausführungsbeispiel wird eine Elektromagnetspule 3 einer Elektromagnet-Bremse über einen Schalter 2 mit zwei Schalterstellungen a und b an eine Stromversorgungsquelle 1 angeschlossen. In den Stromkreis der Elektromagnetspule 3 ist ein Widerstand R geschaltet. Die Spannung am Widerstand R wird einer Differenzierschaltung 4 und einem Spitzenspannungsdetektor 7 zugeführt. An den Ausgang der Differenzierschaltung 4 ist ein Komparator 5 angeschlossen, und an den Ausgang des Komparators 5 ist eine steuerbare Zeitverzögerungsstufe 6 angeschlossen. Die steuerbare Zeitverzögerungsstufe 6 wird von dem Spitzenspannungsdetektor 7 gesteuert. Über die steuerbare Zeitverzögerungsstufe 6 steuert der Komparator 5 eine bistabile Kippstufe 8 in Form eines Flip-Flop an. Die bistabile Kippstufe 8 steuert den Schalter 2 an. In der Verbindungsleitung zwischen der bistabilen Kippstufe 8 und dem Schalter 2 ist eine Überwachungsleitung geschaltet zur Überwachung des jeweiligen Betriebszustands der Bremse. Zum Einschalten des jeweiligen Betriebszustands ist eine Ansteuerleitung vorgesehen, die sowohl zur Stromversorgungsquelle 1 als auch zur bistabilen Kippstufe 8 und dem Spitzenspannungsdetektor 7 geführt ist.

Die Wirkungsweise der dargestellten Schaltungsanordnung ist folgende :

Zum Einschalten des Bremsbetriebs des Meßlaufs wird über die Ansteuerungsleitung "Ansteuerung" ein Einschaltimpuls der Stromversorgungsquelle 1 und der bistabilen Kippstufe 8 zugeführt. Die bistabile Kippstufe 8 sorgt aufgrund dieses Einschaltimpulses dafür, daß der Schalter 2 in der Stellung a sich befindet. Dabei wird an die Elektromagnetspule 3 der Elektromagnet-Bremse eine Versorgungsspannung gelegt, die der Nennspannung entspricht oder darüber liegt. Der durch die Elektromagnetspule 3 fließende Versorgungsstrom I steigt, wie in der Fig. 2 gezeigt ist, mit der Zeit t an. Während dieses Anstiegs bewegt sich die Ankerscheibe über den Luftspalt hin und kommt zur Anlage an der Reibscheibe. Beim Anliegen der Ankerscheibe an die Reibscheibe wird der kontinuierliche Verlauf des Versorungstromanstiegs unterbrochen. Falls die Ankerscheibe in gekippter Lage über den Luftspalt geführt wird, bilden sich an der Unterbrechungsstelle des Versorgungsstromverlaufs zwei Höcker. Nach dem zeitlichen Ablauf des zweiten Höckers ist die Ankerscheibe vollständig in Anlage an der Reibscheibe. Falls eine exakte Parallelführung der Ankerscheibe erzielt ist, treten die beiden Höcker nicht in Erscheinung, sondern der Stromverlauf zeigt eine etwa kontinuierliche, etwas abfallende Stufe.

Würde weiterhin die Versorgungsspannung U1 (Nennspannung oder darüber) an der Elektromagnetspule 3 anliegen, ergäbe sich der in der Fig. 2 dargestellte strichlierte Versorgungsstromverlauf, bis bei einer Stromstärke I1 das Nennbremsmoment erreicht ist, welches man dann benötigt, wenn die Bremse als Haltebremse verwendet werden soll. Beim Abbremsen des Meßlaufs ist jedoch dieses Nennbremsmoment so hoch, daß es zum Verdrehen des auf der Hauptwelle der Auswuchtmaschine aufgespannten Rotors führen kann.

Dem wird bei der Erfindung dadurch entgegengewirkt, daß eine verringerte Versorgungsspannung an die Elektromagnetspule 3 angelegt wird. Diese wird dadurch erreicht, daß der Versorgungsstrom der Elektromagnetspule mit Hilfe der am Widerstand R abgegriffenen Spannung überwacht wird. Diese am Widerstand R vorhandene Spannung wird der Differenzierschaltung 4 zugeführt, welche die Unterbrechung des Versorgungsstromanstiegs, beispielsweise in Form der beiden in der Fig. 2 gezeigten Höcker, erfaßt und ein entsprechendes Signal an den Komparator 5 weitergibt. Dieser Komparator 5 bewertet das vom Differenzierer 4 abgegebene Signal und steuert die bistabile Kippstufe 8 in Form des Flip-Flop an. Damit gewährleistet ist, daß erst dann die bistabile Kippstufe 8 vom Ausgangssignal des Komparators 5 angesteuert wird, wenn die Ankerscheibe vollständig am Reibbelag anliegt, ist die steuerbare Zeitverzögerungsstufe 6 zwischengeschaltet, welche durch den Spitzenspannungsdetektor 7 eingestellt wird. Nach Ablauf dieser eingestellten Verzögerungszeit wird die bistabile Kippstufe 8 betätigt, z.B. zurückgesetzt, und veranlaßt, daß der Schalter 2 in die Schalterstellung b kommt. Hierdurch wird dann die verringerte Versorgungsspannung U2 (Betriebsspannung) an die Elektromagnetspule 3 angelegt, und es fließt in dieser ein Betriebsstrom I2, welcher das gewünschte Bremsmoment hervorruft. Um eine Alterung der Bremsenbestandteile und Toleranzen der Bremsenbestandteile auszugleichen, kann die Größe der Versorgungsspannung U2 einstellbar sein. Hierzu kann man beispielsweise einen nicht näher dargestellten Digital-Analog-Wandler einsetzen. Auf diese Weise läßt sich immer das gewünschte Bremsmoment für die Betriebsbremsenfunktion der Elektromagnet-Bremse erreichen.

## Ansprüche

1. Verfahren zum Stillsetzen des Meßlaufs eines auszuwuchtenden Rotors mittels einer Elektromagnet-Bremse, bei der eine Elektromagnetspule (3) zum Anziehen einer mit Federkraft belasteten Ankerscheibe über einen bei gelüfteter Bremse vorhandenen Luftspalt an einen Reibbelag und zur Erzielung eines Bremsmoments bei am Reibbelag anliegender Ankerscheibe mit einem elektrischen Versorgungsstrom versorgt wird, dadurch gekennzeichnet, daß beim Anliegen der Ankerscheibe am Reibbelag die Versorgungsstromstärke verringert wird und auf einer Stromstärke (I2) gehalten wird, durch welche zur Erzielung eines gegenüber dem Nennbremsmoment verringerten Bremsmomentes die Federkraft bei am Reibbelag angelegter Ankerscheibe überwunden wird.

2. Verfahren nach Anspruch 1, dadurch gekennzeichnet, daß durch den Versorgungsstrom eine zur Federkraft entgegengesetzt gerichtete Kraft auf die angelegte Ankerscheibe ausgeübt wird, die etwa das 2- bis 3fache der Federkraft ausmacht.

3. Verfahren nach Anspruch 1 oder 2, dadurch gekennzeichnet, daß zur Feststellung des Anliegens der Ankerscheibe am Reibbelag der Stromanstieg beim Anlegen zumindest einer der Nennspannung (14) entsprechenden Versorgungsspannung an den Elektromagneten überwacht wird.

4. Elektrische Schaltungsanordnung zur Durchführung des Verfahrens nach einem der Ansprüche 1 bis 3 mit einer Elektromagnetspule (3) zum Anziehen einer federbelasteten Ankerscheibe in einer Elektromagnet-Bremse, die als Betriebsbremse in einer Auswuchtmaschine zum Stillsetzen eines Meßlaufs eines auszuwuchtenden Rotors dient, gekennzeichnet durch eine den Versorgungsstrom der Elektromagnetspule (3) verarbeitende Überwachungsschaltung (R, 4-7), die einen die Elektromagnetspule (3) mit der Stromversorgungsquelle (1) verbindenden Schalter (2) ansteuert, der bei einer Unterbrechung des Versorgungsstromanstiegs, welche beim Anlegen der Ankerscheibe an den Reibbelag auftritt, eine nach dem Einschalten an die Elektromagnetspule (3) angelegte, zumindest der Nennspannung entsprechende erste Versorgungsspannung (U1) abschaltet und eine verringerte, ein gewünschtes Bremsmoment erzeugende zweite Versorgungsspannung (U2) an die Elektromagnetspule (3) legt.

5. Elektrische Schaltungssanordnung nach Anspruch 4, dadurch gekennzeichnet, daß die Abtastschaltung (R, 4-7) einen im Stromkreis der Elektromagnetspule (3) geschalteten Widerstand (R) aufweist, dessen Spannung über eine Differenzierschaltung (4) einem Komparator (5) zugeführt ist, der zur Betätigung des Schalters (2) eine bistabile Kippstufe (8) ansteuert.

6. Elektrische Schaltungsanordnung nach Anspruch 4 oder 5, dadurch gekennzeichnet, daß der Schalter (2) in Abhängigkeit von der Bewertung eines Spitzenspannungsdetektors (3), dem ein dem Versorgungsstromanstieg entsprechendes Signal zugeführt ist, zeitverzögert angesteuert ist.

7. Elektrische Schaltungsanordnung nach Anspruch 5 und 6, dadurch gekennzeichnet, daß der Komparator (5) über eine vom Spitzenspannungsdetektor (7) gesteuerte Zeitverzögerungsstufe (6) die bistabile Kippstufe (8) ansteuert.

8. Elektrische Schaltungsanordnung nach einem der Ansprüche 4 bis 7, dadurch gekennzeichnet, daß die Größe der zweiten Versorgungsspannung (U2), die das gewünschte Bremsmoment liefert, einstellbar ist.


## Revendications

1. Procédé pour arrêter le déroulement de la mesure d'un rotor devant être équilibré, au moyen d'un frein électromagnétique, dans lequel une bobine électromagnétique (3) est alimentée par un courant électrique d'alimentation, pour attirer un disque d'induit, auquel est appliquée la force d'un ressort, contre une garniture de friction, moyennant le franchissement d'un entrefer présent lorsque le frein est desserré, et pour obtenir un couple de freinage lorsque le disque d'induit est appliqué contre la garniture de friction, caractérisé par le fait que, lors de l'application du disque d'induit contre la garniture de friction, on réduit l'intensité du courant d'alimentation et on le maintient à une intensité (J2), grâce à laquelle, pour l'obtention d'un couple de freinage réduit par rapport au couple de freinage nominal, la force du ressort est vaincue lorsque le disque d'induit est appliqué contre la garniture de friction.

2. Procédé suivant la revendication 1, caractérisé par le fait qu'au moyen du courant d'alimentation on exerce, sur le disque d'induit appliqué contre la garniture de friction, une force dirigée en sens opposé de la force du ressort et comprise approximativement entre le double et le triple de la force du ressort.

3. Procédé suivant la revendication 1 ou 2, caractérisé par le fait que pour déterminer l'application du disque d'induit contre la garniture de friction, on contrôle l'accroissement du courant lors de l'application d'au moine une tension d'alimentation, qui correspond à la tension nominale (U1), à l'électroaimant.

4. Montage électrique pour la mise en oeuvre du procédé suivant l'une des revendications 1 à 3, comportant une bobine électromagnétique (3) servant à attirer un disque d'induit, chargé par un ressort, dans un frein électromagnétique qui est utilisé comme frein de service dans une machine d'équilibrage, pour arrêter l'exécution d'une mesure d'un rotor devant être équilibré, caractérisé par un circuit de contrôle (R, 4-7), qui traite le courant d'alimentation de la bobine électromagnétique (3) et commande un interrupteur (2), qui relie la bobine électromagnétique (3) à la source d'alimentation en courant (1) et qui, lors d'une interruption de l'accroissement du courant d'alimentation, qui apparaît lors de l'application du disque d'induit contre la garniture de friction, interrompt une première tension d'alimentation (U1), qui est appliquée après la fermeture à la bobine électromagnétique (3) et correspond au moins à la tension nominale, et applique à la bobine électromagnétique (3) une seconde tension d'alimentation réduite (U2), qui produit un couple de freinage désiré.

5. Montage électrique suivant la revendication 4, caractérisé par le fait que le circuit d'interruption (R, 4-7) comporte une résistance (R), qui est branchée dans le circuit de la bobine électromagnétique (3) et dont la tension est envoyée par l'intermédiaire d'un circuit différentiateur (4), à un comparateur (5) qui commande un étage à bascule bistable (8) pour l'actionnement de l'interrupteur (2).

6. Montage électrique suivant la revendication 4 ou 5, caractérisé par le fait que l'interrupteur (2) est commandé d'une manière retardée en fonction de l'évaluation d'un détecteur de tension crête (3), auquel est envoyé un signal correspondant à l'accroissement du courant d'alimentation

7. Montage électrique suivant les revendications 5 et 6, caractérisé par le fait que le comparateur (5) commande l'étage à bascule bistable (8) par l'intermédiaire d'un étage de retardement (6) commandé par le détecteur de tension crête (7).

8. Montage électrique suivant l'une des revendications 4 à 5, caractérisé par le fait que la valeur de la seconde tension d'alimentation (U2), qui fournit le couple de freinage désiré, est réglable.


## Claims

1. A method of stopping the measuring run of a rotary member to be balanced, by means of an electromagnetic brake in which an electromagnetic coil (3) is supplied with an electrical supply current for attracting an armature disc loaded by a spring force, against a friction lining, by way of an air gap which is present when the brake is released, and for producing a braking moment when the armature disc bears against the friction lining, characterised in that when the armature disc bears against the friction lining the supply current strength is reduced and is held at a current strength $(j_2)$ by which the spring force is overcome, when the armature disc is applied against the friction lining, to produce a braking moment which is reduced in relation to the nominal braking moment.

2. A method according to claim 1 characterised in that the supply current exerts on the armature disc which is applied against the friction lining a force which is directed in opposite relationship to the spring force and which is about 2 to 3 times the spring force.

3. A method according to claim 1 or claim 2 characterised in that for the purposes of establishing that the armature disc is applied against the friction lining the rise in current upon the application of at least a supply voltage corresponding to the nominal voltage ($U_1$) to the electromagnet is monitored.

4. An electrical circuit arrangement for carrying out the method according to one of claims 1 to 3 with an electromagnetic coil (3) for attracting a spring-loaded armature disc in an electromagnetic brake which serves as an operating brake in a balancing machine for stopping a measuring run of a rotary member to be balanced, characterised by a monitoring circuit (R, 4-7) which processes the supply current of the electromagnetic coil (3) and itch actuates a switch (2) which connects the electromagnetic coil (3) to the supply current source (1) and which, upon an interruption in the rise in the supply current occurring when the armature disc is applied against the friction lining switches off a first supply voltage (U1) which is applied to the electromagnetic coil (3) after the switching-on operation and which corresponds at least to the nominal voltage, and applies to the electromagnetic coil (3) a reduced second supply voltage (U2) for producing a desired braking moment.

5. An electrical circuit arrangment according to claim 4 characterised in that the sensing circuit (R, 4-7) has a resistor (R) itch is connected in the circuit of the electromagnetic coil (3) and the voltage of which is supplied by way of a differential circuit (4) to a comparator (5) which actuates a bistable switching circuit (8) for actuating the switch (2).

6. An electrical circuit arrangement according to claim 4 or claim 5 characterised in that the switch (2) is actuated in a time-delayed fashion in dependence on the evaluation of a peak voltage detector (3) to which a signal corresponding to a rise in supply current is fed.

7. An electrical circuit arrangement according to claim 5 and claim 6 characterised in that the comparator (5) actuates the bistable switching circuit (8) by way of a time delay stage (6) which is controlled by the peak voltage detector (7).

8. An electrical circuit arrangement according to one of claims 4 to 7 characterised in that the magnitude of the second supply voltage (U2) which delivers the desired braking moment is adjustable.

FIG. 1

FIG. 2